# EUROPEAN PATENT APPLICATION

(11) **EP 1 541 093 A1**
(43) Date of publication of application: **15.06.2005**
(21) Application number: 02807581.0
(22) Date of filing: 03.07.2002
(51) Int. Cl.: A61C 8/00, A61C 3/02

(54) **STERILISABLE CIRCULAR SCALPEL USED TO CUT THE GUM DURING A DENTAL IMPLANT PROCESS**

(71) Applicant: Parmigiani Izquierdo, José Maria, 03315 Orihuela (ES)
(72) Inventor: Parmigiani Izquierdo, José Maria, 03315 Orihuela (ES)
(74) Representative: Bongiovanni, Simone
(86) International application number: PCT/ES2002/000329
(87) International publication number: WO 2004/004593

(57) **Abstract**

The present invention is aimed at medical professionals working in the dental field, and, in particular, at the specialised area of dental implantation. During one of the intermediate steps of the process of dental implantation, it is necessary to perform an incision in the patient's gum in order to expose pins that have been implanted in the bone in the previous step. The professional knows beyond any doubt the spatial location of each one of said pins. In order to gain access to the pins, he must cut the gum which has healed enveloping the pins. In order to carry out this operation, the professional has to rely upon a scalpel that performs a longitudinal cut, and, given that the pins are circumferential, this involves unnecessary extra cutting of tissue. Use of a circular scalpel according to the present invention ensures a marked improvement in the result obtainable for the professional given that the area affected by the incision is the minimum one necessary for proceeding with the process of dental implantation. The advantages that derive from this selective incision are evident: a smaller area of the gum is affected; the professional has a greater control over the instrument; the time for healing is reduced; an impression can be taken during the same visit in which the incision is made (owing to the fact that the positioning elements close the capillary vessels affected by the incision); and the outward appearance of a scar in the affected area is improved.

## Description

The present invention relates to an application of an instrument which is to be used in one step of a process of dental implantation.

The use of this instrument enables considerable advantages to be achieved both for the professional and for the patient.

The total time involved in the process is considerably reduced, given that the selective and precise incision that is obtained with the device enables the professional to take an impression during the same session in which the incision is made.

For the patient, use of the device by the professional means an important reduction in the area of the incision of the gum tissue, with consequent benefits in terms of recovery and healing of the area.

Up to now, professionals specialised in dental implants use a straight-cutting scalpel. The length and depth of the incision produced by a straight scalpel depends upon the professional who carries out the operation.

When the circular scalpel is used, the first of the aforementioned variables, i.e., the length, remains determined, without any possibility of error on account of the diameter of the scalpel selected, it remaining up to the professional to choose the depth of the incision in the gum. In this regard, it is known by specialised professionals that the biological thickness or width of the connective tissue and the epithelium of the gum is around 2.5 to 3 mm. Determining exactly the depth of the incision is an aspect of the operation that can be observed exactly thanks to the millimetre-graded scale of the circumferential marks engraved in a conic active part of the circular scalpel.

The above facts helps a medical professional to circumscribe the area affected by making an incision in the patient's gum limited to the diameter of the circular scalpel.

In other spheres of medicine, similar scalpels are used for operations in an area that is limited to the diameter of the scalpel, as occurs in foot surgery, in the case of selective removal of tissue. This type of instrument has the drawback of having an area of operation of large dimensions, which renders it inapplicable in the mouth of a patient.

The device according to the invention is formed by a single piece with an axis of revolution. Two areas are clearly identified in terms of shape and function, one referred to herein as "handle area", and the other referred to as "active or cutting area".

The device is designed to be used in two different ways as far as the area of operation is concerned:
a) manual operation; and
b) motor-driven operation.

### a) Manual operation

In this case, the scalpel has a cylindrical body, with a surface finish which is effective for preventing it from slipping between the tips of the fingers of the professional and thus enabling the turning and the axial force that are necessary to make the incision to be exerted.

### b) Motor-driven operation

The actuation end has a mechanism identical to the ones used by milling cutters employed in dental surgery so that the scalpel will adapt conveniently to the existing kinds of drills or micro-motors that are found in all dental clinics.

When the drill or micro-motor is operated, it transmits to the scalpel the action of turning, which, added to the axial force exerted by the professional, produces the incision.

At the other end of the area of operation and on the same axis of revolution, there is located the active or cutting area proper. This area consists of a form of cup sharpened at its end, which carries on the outside a series of circumferential marks engraved in low relief set at a distance of one millimetre apart from one another in order to enable evaluation of the depth of the incision.

The invention takes the form of a set of scalpels of different diameters for being used according to the diameter of the incision that is desired. Each set of the different diameters are available in the manual version and motor-driven version.

The diameters of the active or cutting area, both in the case of manual operation and in the case of motor-driven operation, are the following: 4.0 mm; 4.5 mm; 5.0 mm; 5.5 mm; 6.0 mm; 6.5 mm; and 7.0 mm.

The material of which the device is made enables complete and safe sterilisation of the instrument in an autoclave.

### BRIEF DESCRIPTION OF THE DRAWINGS

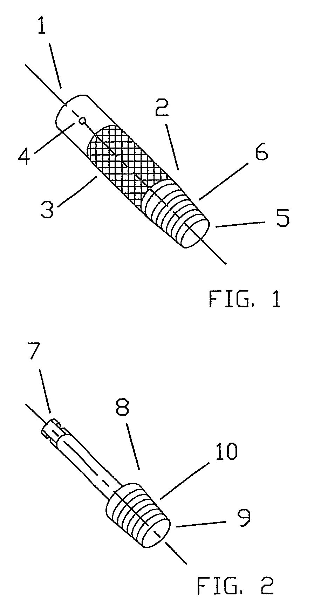

Figure 1 illustrates a perspective view of the scalpel with manual operation.
Figure 2 illustrates a perspective view of the scalpel with motor-driven operation.

## Claims

1. A STERILISABLE CIRCULAR SCALPEL USED TO CUT A GUM DURING A DENTAL IMPLANT PROCESS, which, even though it is a single unit, comprises two differentiated areas (1) and (2), the first one of which is provided with a surface finish (3) adequate for preventing the instrument from slipping from the professional's fingers, and a small through hole (4), which is set in a direction transverse to the principal axis and in which it is possible to fix a safety cord to prevent accidental dropping, whereas the area (2) has the shape of a hollow cone sharpened at its end (5), with a series of circumferential marks (6) engraved in low relief to measure the depth of the incision, and which, on account of the reciprocating action of turning together with the axial force exerted by the professional's fingers generates a clean and minimal incision in the patient's gum.

2. A STERILISABLE CIRCULAR SCALPEL USED TO CUT A GUM DURING A DENTAL IMPLANT PROCESS, which, even though it is a single unit, comprises two differentiated areas (7) and (8), the first one of which is provided with a mechanism adequate for fitting to a drill or a micro-motor, whereas the area (8) has a shape of a hollow cone sharpened at its end (9), with a series of circumferential marks (10) engraved in low relief to measure the depth of the incision, and which, on account of the action of turning exerted by the drill or micro-motor together with the axial force exerted by the professional's hand generates a clean and minimal incision in the patient's gum.
